# EUROPEAN PATENT APPLICATION

(11) **EP 4 266 822 A1**
(43) Date of publication of application: **25.10.2023**
(21) Application number: 23167320.3
(22) Date of filing: 11.04.2023
(51) Int. Cl.: H04W 76/30, H04W 12/00, H04W 92/02, H04W 60/00

(54) **STARTING USER EQUIPMENT INITIATED PROCEDURE FOR RELEASE OF NON-3GPP CONNECTION IN RESPONSE TO RECEIVING SPECIFIC MESSAGE FROM 3GPP NETWORK OVER NON-3GPP CONNECTION**

(30) Priority: 22.04.2022 US 202263333584 P; 21.03.2023 US 202318123989
(71) Applicant: MediaTek Inc., Hsin-Chu 300 (TW)
(72) Inventor: LIU, Ren-Huang, 30078 Hsinchu City (TW); LIN, Yu-Hsin, 30078 Hsinchu City (TW)
(74) Representative: Hoefer & Partner Patentanwälte mbB

(57) **Abstract**

A connection management method includes: checking if a specific message is received from a 3rd Generation Partnership Project, 3GPP, network over a non-3GPP connection (402); and in response to receiving the specific message, starting a user equipment, UE, initiated procedure for release of the non-3GPP connection (404, 406, 408) .

## Description

### Cross Reference to Related Applications

This application claims the benefit of U.S. Provisional Application No. 63/333,584, filed on April 22nd, 2022. The content of the application is incorporated herein by reference.

### Background

The present invention relates to wireless communications, and more particularly, to a method and apparatus for starting a user equipment (UE) initiated procedure for release of a non 3rd Generation Partnership Project (non-3GPP) connection in response to receiving a specific message from a 3GPP network over the non-3GPP connection.

Fifth-generation (5G) systems are designed to enable convergent access-agnostic service availability. This means that 5G services will be available over 5G New Radio (NR) air interfaces and also through other non-3GPP access networks such as IEEE 802.11 (Wi-Fi). Basically, the 5G system (5GS) consists of Radio Access Network (RAN) and Core Network (CN). The 5G Core Network (5GCN) can be visualized as a collection of Network Functions (NFs) that provide together the expected core functionalities. Each NF exposes its services to other NFs, acting as a service provider. As a service consumer, an NF can use the services offered by other NFs. Regarding the untrusted non-3GPP access network, it is not controlled by the mobile network operator (MNO). Hence, the MNO does not trust in the security offered by the non-3GPP access network. Therefore, the traffic must be transported by a secure option from MNO's point of view. The main component of 5GS to support the untrusted non-3GPP access network is the Non-3GPP Interworking Function (N3IWF). The fundamental idea of N3IWF is to act as a gateway for communication between user equipment (UE) and 5GCN. The access to 5GCN from the untrusted network involves registration, authentication, and authorization procedures. Registration via an untrusted non-3GPP access network uses a vendor-specific Extensible Authentication Protocol (EAP) method called EAP-5G. This method is used for Non Access Stratum (NAS) messages encapsulation over the Internet Key Exchange Protocol Version 2 (IKEv2) between UE and N3IWF. At the end of the registration procedure, a signalling Internet Protocol Security (IPsec) Security Association (SA) is established between UE and N3IWF, and the following NAS messages are transferred over the signalling IPsec SA. After the signalling IPsec SA is established, the UE is ready to start the establishment of PDU session for effective data communication. In a case where the upper layer indicates that no 5G-NAS messages need to be transmitted between the UE and the N3IWF, the UE shall terminate the EAP-5G session. However, from NAS's view, it is not clear when to release the non-3GPP access stratum connection. Thus, there is a need for an innovative non-3GPP connection release design which clearly defines scenarios in which the UE should initiate the release of the non-3GPP access stratum connection.

### Summary

One of the objectives of the claimed invention is to provide a method and apparatus for starting a UE-initiated procedure for release of a non-3GPP connection in response to receiving a specific message from a 3GPP network over the non-3GPP connection. A connection management method and a user equipment according to the invention are defined in the independent claims. The dependent claims define preferred embodiments thereof.

According a first aspect, an exemplary connection management method is disclosed. The exemplary connection management method includes: checking if a specific message is received from a 3GPP network over a non-3GPP connection; and in response to receiving the specific message, starting a UE-initiated procedure for release of the non-3GPP connection.

According to a second aspect of the present invention, an exemplary UE is disclosed. The exemplary UE includes a wireless communication circuit and a control circuit. The wireless communication circuit is arranged to communicate with a 3GPP network over a non-3GPP connection. The control circuit is arranged to check if a specific message over the non-3GPP connection is received by the wireless communication circuit from the 3GPP network; and in response to receiving the specific message, start a UE-initiated procedure for release of the non-3GPP connection.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a diagram illustrating a user equipment (UE) according to an embodiment of the present invention.
FIG. 2 is a diagram illustrating an example of the EAP-5G session completion after registration reject.
FIG. 3 is a diagram illustrating an example of a service request procedure not accepted by the network.
FIG. 4 is a flowchart illustrating a connection management method according to an embodiment of the present invention.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ... ". Also, the term "couple" is intended to mean either an indirect or direct electrical connection. Accordingly, if one device is coupled to another device, that connection may be through a direct electrical connection, or through an indirect electrical connection via other devices and connections.

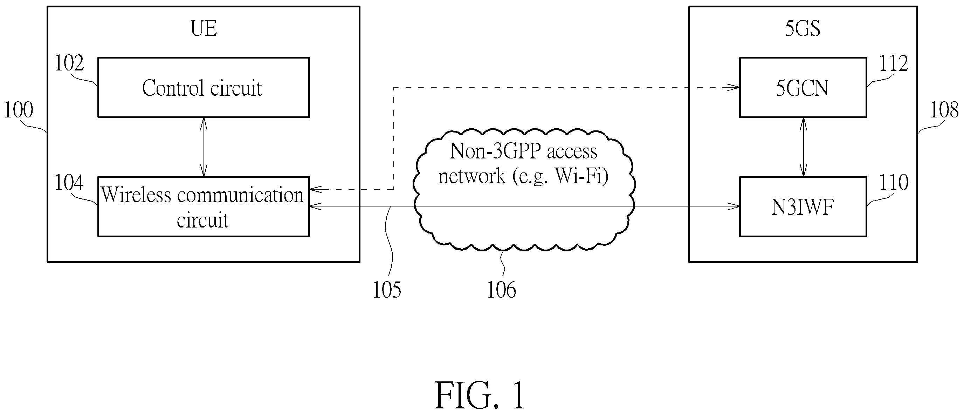

FIG. 1 is a diagram illustrating a user equipment (UE) according to an embodiment of the present invention. The UE 100 includes a control circuit 102 and a wireless communication circuit 104. The wireless communication circuit 104 is arranged to communicate with a 3GPP network (e.g., a 5G Core Network (5GCN) 112 of a 5G System (5GS) 108) over a non-3GPP connection 105 established through a non-3GPP access network 106 (e.g., Wi-Fi specified by IEEE 802.11), where the 5GCN 112 supports a plurality of NFs, including Access and Mobility Management Function (AMF), Session Management Function (SMF), User Plane Function (UPF), etc. In addition to the non-3GPP access, the wireless communication circuit 104 may further support 3GPP access. That is, the wireless communication circuit 104 may include transmit (TX) and receive (RX) circuits that need to communicate with the non-3GPP access network 106 for enabling the UE 100 to access the 5GCN 112 over the non-3GPP access, and/or may include TX and RX circuits that enable the UE 100 to access the 5GCN 112 without via the non-3GPP access network 106. An untrusted wireless local network (WLAN) access (e.g., Wi-Fi) is integrated with the 5GCN 112 via a non-3GPP Interworking Function (N3IWF) 110 implemented in the 5GS 108. In this embodiment, the control circuit 102 is arranged to check if a specific message over the non-3GPP connection 105 is received by the wireless communication circuit 104 from the 3GPP network (e.g., 5GCN 112). For example, the specific message is sent from the 5GCN 112, and is relayed by the N3IWF 110 over the non-3GPP connection 105. In response to receiving the specific message, the control circuit 102 is arranged to start a UE-initiated procedure for release of the non-3GPP connection 105. For example, upon receiving the specific message, the control circuit 102 determines that no 5G-NAS messages need to be transmitted between the UE 100 and the N3IWF 110 (i.e., there is no need to keep the current non-3GPP connection anymore), and thus starts the UE-initiated procedure for release of the non-3GPP connection 105 between the UE 100 and the N3IWF 110. In this embodiment, the specific message may be a 5G Mobility Management (5GMM) message, such as a REGISTRATION REJECT message over non-3GPP access or a SERVICE REJECT message over non-3GPP access. It should be noted that only the components pertinent to the present invention are shown in FIG. 1. In practice, the UE 100 is allowed to have other components to achieve other designated functions.

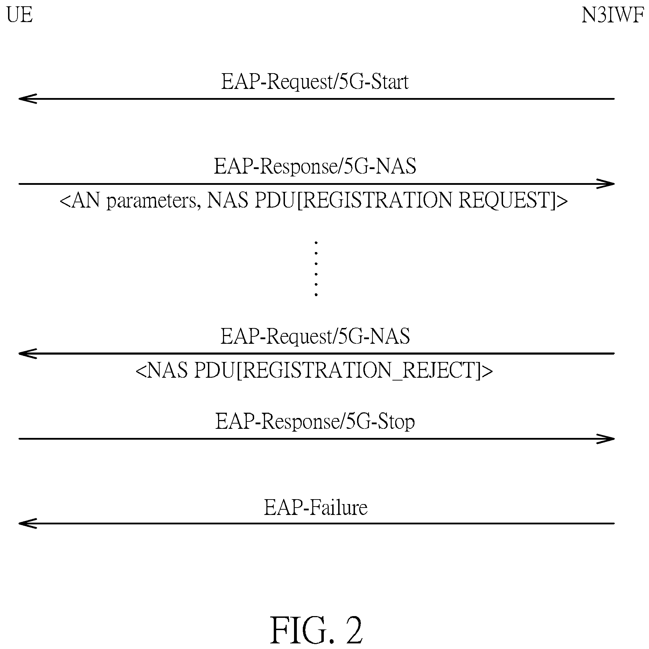

FIG. 2 is a diagram illustrating an example of the EAP-5G session completion after registration reject. After selection of the N3IWF 110, the UE 100 proceeds with the registration, authentication and authorization procedures to access the 5GCN 112 over the non-3GPP connection 105. The UE 100 starts with an IKE_SA_INIT exchange to establish an IKE SA, which enables encryption and integrity protection for all subsequent IKE messages. The UE 100 then sends the IKE_AUTH request without the AUTH payload, which indicates to the N3IWF 110 to start an EAP-5G session. The N3IWF 110 responds with an IKE AUTH response, including EAP-Request/5G-Start packet that informs the UE 100 to initiate an EAP-5G session, i.e., to start sending NAS messages encapsulated within EAP-5G packets. The UE 100 sends the IKE_AUTH request including an EAP-Response/5G-NAS packet that contains a NAS message "REGISTRATION REQUEST" and Access Network (AN) parameters. All subsequent NAS messages between UE 100 and N3IWF 110 are encapsulated within EAP/5G-NAS packages. The N3IWF 110 selects an AMF (e.g., AMF of 5GCN 112) based on the received AN parameters and local policy, and then forwards the "REGISTRATION REQUEST" received from UE 100 to the selected AMF. All NAS messages between UE 100 and AMF of 5GCN 112 are transparently relayed by N3IWF 110. In this embodiment, the AMF of 5GCN 112 responds with a NAS message "REGISTRATION REJECT", and is relayed to the UE 100 via an EAP-Request/5G-NAS packet sent from the N3IWF 110. Upon receiving indication from the 5GMM REGISTRATION REJECT message over non-3GPP access that no 5G-NAS messages need to be transmitted between UE 100 and N3IWF 110, the UE 100 (particularly, control circuit 102 of UE
100) shall terminate the EAP-5G session by sending an EAP-Response/5G-Stop message to the N3IWF 110 for initiating an EAP-5G session completion procedure. On reception of EAP-Response/5G-Stop message, the N3IWF 110 shall complete the EAP-5G session by sending an EAP-Failure message to the UE 100. On reception of the EAP-Failure message from the N3IWF 110, the UE 100 shall delete any context related to IKE SA without requiring an explicit INFORMATIONAL exchange carrying a Delete payload. In this way, the non-3GPP connection 105 is released/terminated by the UE-initiated EAP-5G session completion procedure for resource/performance efficiency.

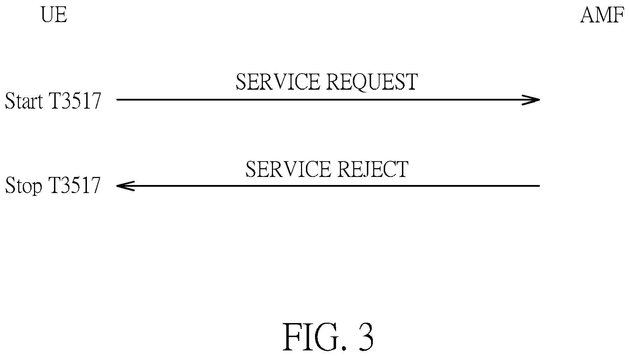

FIG. 3 is a diagram illustrating an example of a service request procedure not accepted by the network. The service request procedure via untrusted non-3GPP access shall be used by the UE 100 in CM-IDLE state over non-3GPP access to request the re-establishment of the NAS signalling connection and the re-establishment of the user plane for all or some of the PDU Sessions which are associated to non-3GPP access. The service request procedure via untrusted non-3GPP access shall be used by the UE 100 in CM-CONNECTED state over non-3GPP access to request the re-establishment of the user plane for all or some of the PDU Sessions which are associated to non-3GPP access. If the service request cannot be accepted, the network (particularly, AMF of 5GCN 112) shall return a SERVICE REJECT message to the UE 100 including an appropriate 5GMM cause value. The UE 100 starts the timer T3517 at the time the SERVICE REQUEST message is sent, and stops the timer T3517 at the time the SERRVICE REJECT message is received. In this embodiment, upon receiving the 5GMM SERVICE REJECT message over non-3GPP access, the UE 100 initiates the release of the non-3GPP connection 105 for resource/performance efficiency.

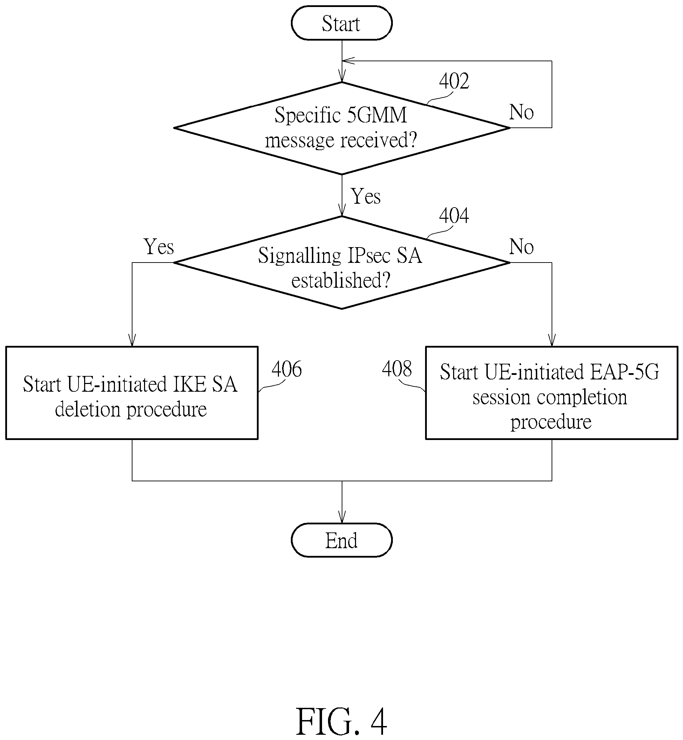

FIG. 4 is a flowchart illustrating a connection management method according to an embodiment of the present invention. The connection management method may be employed by the UE 100 shown in FIG. 1. Provided that the result is substantially the same, the steps are not required to be executed in the exact order shown in FIG. 4. In addition, one or more steps may be added to or omitted from the flow shown in FIG. 4, depending upon actual design considerations. At step 402, the control circuit 102 checks if a specific message over a non-3GPP connection is received by the wireless communication circuit 104 from a 3GPP network. For example, the 3GPP network may be the 5GCN 112, the non-3GPP connection may be the non-3GPP connection 105 between UE 100 and N3IWF 110, and the specific message may be one of 5GMM messages, including a REGISTRATION REJECT message and a SERVICE REJECT message. If the specific message (e.g., REGISTRATION REJECT or SERVICE REJECT) is received from the 3GPP network over non-3GPP access, the flow proceeds with step 404. At step 404, the control circuit 102 checks if the signalling IPsec SA is established. If the signalling IPsec SA is already established, the flow proceeds with step 406. At step 406, the control circuit 102 initiates an IKE SA deletion procedure by sending an INFORMATIONAL request message including a Delete payload to the N3IWF 110, to inform the network to release the non-3GPP connection 105. If the signalling IPsec SA is not established yet, the flow proceeds with step 408. At step 408, the control circuit 102 initiates an EAP-5G session completion procedure by sending an EAP-Response/5G-Stop message to the N3IWF 110, to inform the network to release the non-3GPP connection 105. Since the present invention is focused on initiation of the access stratum connection release for a UE in non-3GPP access and details of the IKE SA deletion procedure and the EAP-5G session completion procedure are known to those skilled in the pertinent art, further description of steps 406 and 408 are omitted here for brevity.

Preferably, the UE 100 (particularly, control circuit 102 of UE 100) may initiate the release of the non-3GPP connection 105 under other scenarios. For example, the UE 100 (particularly, control circuit 102 of UE 100) may start a UE-initiated procedure for release of the non-3GPP connection 105 after sending a 5GMM DEREGISTRATION REQUEST message. For another example, the UE 100 (particularly, control circuit 102 of UE 100) may start a UE-initiated procedure for release of the non-3GPP connection 105 after starting a T3540 timer. However, these are for illustrative purposes only, and are not meant to be limitations of the present invention.

In above embodiments, the proposed non-3GPP connection release design is based on the architecture with integration and interworking of Wi-Fi with 5G system. In practice, the proposed non-3GPP connection release design can be applicable to the architecture with integration and interworking of any non-3GPP access with any 3GPP network.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A connection management method, comprising:
checking if a specific message is received from a 3rd Generation Partnership Project, in the following also referred to as 3GPP, network over a non-3GPP connection (402); and
in response to receiving the specific message, starting a user equipment, in the following also referred to as UE, initiated procedure for release of the non-3GPP connection (404, 406, 408) .

2. The method of claim 1, wherein the specific message is a REGISTRATION REJECT message over non-3GPP access.

3. The method of claim 1 or 2, wherein the specific message is a SERVICE REJECT message over non-3GPP access.

4. The method of any one of claims 1 to 3, wherein the 3GPP network is a 5G core network.

5. The method of any one of claims 1 to 4, wherein the specific message is a 5G Mobility Management, in the following also referred to as 5GMM, message.

6. The method of any one of claims 1 to 5, wherein the UE initiated procedure is an Extensible Authentication Protocol - 5G, in the following also referred to as EAP-5G, session completion procedure (408) .

7. The method of any one of claims 1 to 6, wherein the UE initiated procedure is an Internet Key Exchange Protocol, in the following also referred to as IKE, Security Association, in the following also referred to as SA, deletion procedure (406).

8. A user equipment, in the following also referred to as UE, comprising:
a wireless communication circuit (104), arranged to communicate with a 3rd Generation Partnership Project, in the following also referred to as 3GPP, network (112) over a non-3GPP connection (105); and
a control circuit (102), arranged to check if a specific message over the non-3GPP connection (105) is received by the wireless communication circuit (104) from the 3GPP network (112); and in response to receiving the specific message, start a UE-initiated procedure for release of the non-3GPP connection (105).

9. The UE of claim 8, wherein the specific message is a REGISTRATION REJECT message over non-3GPP access.

10. The UE of claim 8 or 9, wherein the specific message is a SERVICE REJECT message over non-3GPP access.

11. The UE of any one of claims 8 to 10, wherein the 3GPP network is a 5G core network.

12. The UE of any one of claims 8 to 11, wherein the specific message is a 5G Mobility Management, in the following also referred to as 5GMM, message.

13. The UE of any one of claims 8 to 12, wherein the UE initiated procedure is an Extensible Authentication Protocol - 5G, in the following also referred to as EAP-5G, session completion procedure.

14. The UE of any one of claims 8 to 13, wherein the UE initiated procedure is an Internet Key Exchange Protocol, in the following also referred to as IKE, Security Association, in the following also referred to as SA, deletion procedure.
